# FASCICULE DE BREVET EUROPEEN

(11) **EP 3 084 149 B1**
(45) Date de publication et mention de la délivrance du brevet: **07.02.2018**
(21) Numéro de dépôt: 14830815.8
(22) Date de dépôt: 17.12.2014
(51) Int. Cl.: F01K 7/22, F01K 7/38

(54) **PROCÉDÉ ET APPAREIL DE GÉNÉRATION D'ÉLECTRICITÉ UTILISANT UNE CENTRALE NUCLÉAIRE**
VERFAHREN UND VORRICHTUNG ZUR STROMERZEUGUNG MITTELS EINES KERNKRAFTWERKS
METHOD AND APPARATUS FOR GENERATING ELECTRICITY USING A NUCLEAR POWER PLANT

(30) Priorité: 20.12.2013 FR 1363248
(43) Date de publication de la demande: 26.10.2016
(73) Titulaire: L'Air Liquide Société Anonyme pour l'Etude et l'Exploitation des Procédés Georges Claude, 75007 Paris (FR)
(72) Inventeur: DAVIDIAN, Benoît, F-94100 Saint Maur des Fosses (FR); PAUFIQUE, Cyrille, F-69002 Lyon (FR)
(74) Mandataire: Mercey, Fiona Susan
(86) Numéro de dépôt international: PCT/FR2014/053392
(87) Numéro de publication internationale: WO 2015/092277

(56) Documents cités:
- JP-A- S5 647 625
- JP-A- S59 180 012
- US-A- 3 943 719
- US-A- 4 329 842
- US-A1- 2009 100 845
- US-A1- 2012 151 961
- US-B1- 7 028 481

## Description

La présente invention est relative à un procédé de génération d'électricité permettant également de stocker de l'énergie par liquéfaction de gaz. L'invention concerne également un appareil pour mettre en oeuvre ce procédé.

Un premier but de l'invention est de réduire les coûts de stockage d'énergie d'un procédé de génération d'électricité utilisant une centrale en y intégrant un stockage d'énergie électrique par gaz liquéfié.

Beaucoup de centrales nucléaires sont des centrales à eau sous pression.

Ces centrales nucléaires comptent au moins deux circuits d'eau, indépendants les uns des autres : le circuit primaire et le circuit secondaire.

Le circuit primaire sert à capter la chaleur de la réaction nucléaire. De la chaleur est produite en très grande quantité par la fission des atomes d'uranium.

Placée dans la cuve du réacteur, l'eau du circuit primaire atteint ainsi la température d'environ 320° après avoir été chauffée lors de la réaction en chaîne.

Cette eau ne bout pas car elle est fortement pressurisée. Elle est ensuite dirigée du coeur du réacteur vers le circuit primaire, qui est un circuit fermé.

L'eau du circuit primaire chauffe l'eau du circuit secondaire via un générateur de vapeur qui permet l'échange thermique entre les deux circuits indépendants. Les tuyaux du circuit primaire chauffent l'eau du circuit secondaire par contact pour former de la vapeur d'eau.

L'eau du circuit secondaire est à plus basse pression, et se transforme donc en vapeur. Cette vapeur entraîne la turbine du réacteur. La rotation de la turbine entraîne elle-même l'alternateur, et permet ainsi de produire de l'électricité.

D'autres centrales nucléaires ont uniquement un circuit primaire et l'eau qui est chauffée par la réaction nucléaire se vaporise pour former de la vapeur d'eau.

Il est surprenant de constater que la génération de l'électricité est plus efficace quand une partie de la chaleur générée par la centrale est utilisée non pas dans la turbine à vapeur de la centrale mais pour préchauffer un gaz destiné à une turbine.

Selon l'invention, on utilise de la chaleur thermique noble (et non résiduaire) qui sert normalement à faire l'électricité de la centrale et en plus, au moment, où on doit fournir le réseau en électricité. On utilise le meilleur rendement du cycle air (ou gaz de l'air) vaporisé par rapport au cycle vapeur de la turbine à vapeur de la centrale, pour fournir plus d'énergie au réseau.

En périodes de basse consommation d'électricité, il est parfois nécessaire de stocker l'énergie thermique générée par la centrale. Les stockages thermiques requis pour ce faire sont volumineux, coûteux et relativement difficile à mettre en oeuvre.

La présente invention propose d'éliminer ou de réduire la taille de ces stockages en les remplaçant au moins partiellement par un système de liquéfaction d'air ou de gaz de l'air.

US-A-2012151961 décrit un procédé de stockage d'air liquéfié. Pendant les phases où la demande électrique est faible, de l'air est liquéfié et stocké. Pendant les phases où la demande électrique est forte, l'air liquide est vaporisé dans un système qui optimise la récupération de froid, pour générer un fluide sous pression, qui est turbiné pour obtenir de l'électricité. L'énergie obtenue est d'autant plus intéressante (et donc le rendement de stockage) que le fluide est chauffé avec de la chaleur résiduaire avant détente.

L'article «Des Solutions Cryogéniques pour le Stockage de l'Energie et l'Optimisation Energétique » dans la Revue Générale du Froid par Dubettier et al décrit le chauffage de l'air vaporisé en utilisant de la chaleur résiduaire ou au moyen de brûleurs de gaz naturel afin d'augmenter l'énergie produite en détendant l'air.

La solution décrite dans l'art antérieur est la suivante :
- en phase de faible demande :
   - D'utiliser l'énergie électrique pour produire l'air liquide
   - De stocker une partie de l'énergie thermique disponible pour un usage lors des fortes demandes, qui sera utilisée pour chauffer le gaz sous pression avant détente
- et en phase de forte demande :
   - Vaporiser le gaz liquéfié, en récupérant le froid, pour produire un gaz sous pression
   - Réchauffer le gaz sous pression grâce à l'énergie thermique stockée précédemment
   - Détendre le gaz pour produire de l'électricité

Au lieu de stocker de l'énergie thermique en phase de faible demande, on propose de soutirer une partie de l'énergie thermique produite par la centrale thermique en phase de forte demande : ceci réduit la production électrique de la centrale thermique, mais permet d'augmenter de façon importante l'énergie électrique produite par le fluide sous pression qui aura été chauffé par cette énergie thermique soutirée.

La performance énergétique est certes légèrement réduite dans ce cas, mais cela permet d'éviter l'investissement d'un stockage thermique qui s'avère de très grande taille et très couteux.

Un but de l'invention est de réduire le coût d'un appareil de génération d'électricité en évitant le besoin d'avoir des stockages.

JP-A-56047625 et JP-A-59180012 décrivent un procédé selon le préambule de la revendication 1 qui ne permet pas de stocker de l'énergie.

US7028481 décrit l'usage de chaleur d'une centrale nucléaire oour vaproiser du gaz naturel liquéfié.

Selon un objet de l'invention, il est prévu un procédé selon la revendication 1. Selon d'autres aspects facultatifs:
- une première partie de la vapeur d'eau générée par la réaction nucléaire est détendue dans la première turbine et une deuxième partie de la vapeur d'eau générée par la réaction nucléaire sert à préchauffer le gaz sous pression destiné à la deuxième turbine, le débit de la deuxième partie de la vapeur d'eau étant au plus 30% de la somme des première et deuxième parties.
- les première et deuxième turbines ensemble produisent plus d'électricité qu'aurait produit la première turbine seule en utilisant toute la chaleur du fluide chauffé ou des fumées respectivement pour chauffer l'eau ou la vapeur d'eau destinée à la première turbine.
- l'électricité générée par la première et/ou la deuxième turbine est envoyé au réseau.
- le seul gaz détendu dans la deuxième turbine est le fluide sous pression. Selon d'autres objets facultatifs:
   - la deuxième période correspond à une période de plus faible demande en électricité et/ou de tarif d'électricité plus faible que la première période.
   - pendant la deuxième période la première turbine génère de l'électricité qui sert à liquéfier le gaz.
   - pendant la première période, on ne liquéfie pas le gaz.
   - pendant la première période on ne vaporise pas le liquide stocké et/ou on ne détend pas le fluide sous pression dans la deuxième turbine.

Selon un autre objet de l'invention, il est prévu un appareil selon la revendication 10 ou 11.

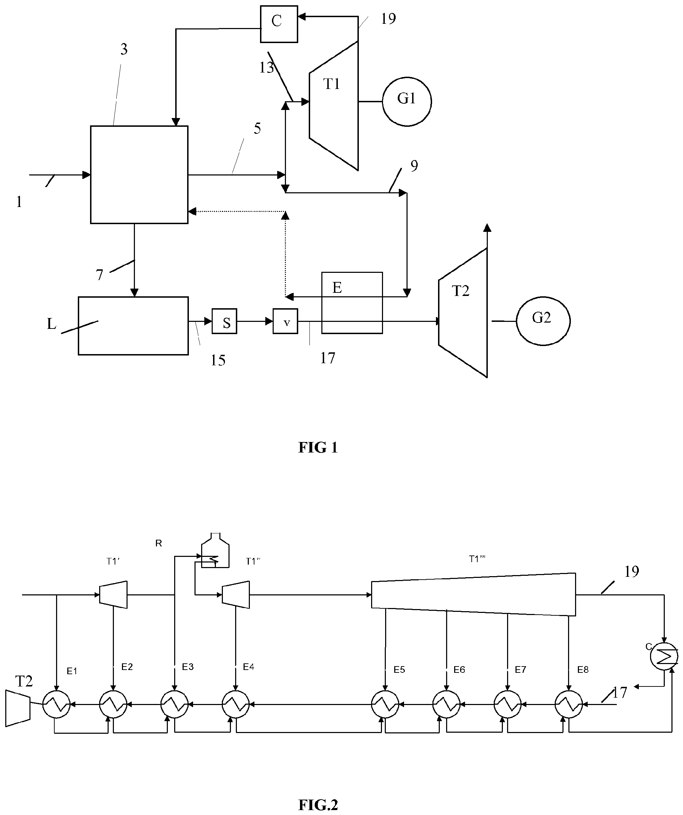

L'invention sera décrite de manière plus détaillée en se référant aux figures qui montrent un procédé selon l'invention. La Figure 1 montre de manière schématique et partielle un procédé selon l'invention et la Figure 2 montre le détail d'une variante d'un procédé selon l'invention.

Dans la Figure 1, pour mettre en oeuvre un procédé de génération d'électricité, on utilise une centrale 3 qui peut être une une centrale nucléaire où s'effectue une réaction nucléaire ainsi qu'un appareil de vaporisation de liquide V.

On produit de l'énergie thermique au moyen de la centrale 3

La centrale 3 est une centrale nucléaire dans laquelle la réaction nucléaire chauffe et vaporise de l'eau, directement ou indirectement, pour produire de la vapeur d'eau 5.

Une partie 13 de la vapeur d'eau 5, constituant au moins 70% du débit 5, est détendue dans une première turbine T1, la vapeur détendue 19 étant ensuite généralement condensée dans un condenseur C, puis recyclée vers la centrale 3 et on utilise la première turbine pour entraîner un générateur d'électricité G1 afin de produire de l'électricité.

Le reste de la vapeur d'eau 9, constituant au plus 30% du débit 5, est utilisée pour chauffer un liquide cryogénique vaporisé 17, pouvant être par exemple de l'air ou de l'azote. Le liquide vaporisé 17 est chauffé par la vapeur d'eau dans l'échangeur E à une température supérieure à la température ambiante et envoyé à la deuxième turbine T2. On utilise la deuxième turbine pour entraîner un générateur d'électricité G2. Si la détente du liquide vaporisé 17 se fait en plusieurs étapes, le liquide vaporisé 17 peut être chauffé en amont de chaque étape.

Ceci représente la forme la plus simple de mise en oeuvre de l'invention. Dans ce cas, l'air ou l'azote détendu dans la deuxième turbine T2 peut être mis à l'air. La vapeur d'eau 9 qui a chauffé le gaz 17 dans l'échangeur E peut être recyclée à la centrale 3, éventuellement après avoir été condensée dans un condenseur, qui peut être le même que celui après la turbine T1 (le condenseur C) ou mise à l'air.

La quantité d'électricité produite par les deux générateurs G1, G2 excède celle qui serait produite si toute la vapeur 5 était envoyée à la première turbine T1 et seul le générateur G1 fonctionnait.

Il est possible d'utiliser le procédé de manière plus intégrée en utilisant de l'énergie 7 mécanique ou électrique provenant de la centrale 3 pour faire fonctionner un appareil de liquéfaction L d'un gaz de l'air, par exemple l'air ou l'azote. Le gaz liquéfié stocké dans un stockage S et le liquide stocké est soutiré pour être vaporisé dans le vaporiseur V pour fournir le gaz à détendre dans la deuxième turbine T2.

Le gaz liquéfié peut être un gaz autre qu'un gaz de l'air, par exemple du gaz naturel, du dioxyde de carbone.

Lors d'une première période, l'appareil de liquéfaction L ne fonctionne pas et le liquide stocké est vaporisé, chauffé par la vapeur 9 et envoyé à la deuxième turbine T2. Cette période correspond à une période de plus forte demande en électricité et/ou de tarif d'électricité plus élevé. Seule la partie 13 de la vapeur est envoyée à la première turbine T1. La partie 13 constitue au moins 70% du débit 5.

Lors d'une deuxième période, qui est une période de plus faible demande en électricité et/ou de tarif d'électricité plus faible que la première période, toute la vapeur 5 est envoyée à la première turbine T1, comme débit 13, l'appareil de liquéfacteur reçoit de l'énergie 7 pour liquéfier le gaz et stocke le gaz liquéfié. Le vaporiseur V et la turbine T2 ne marchent pas. Aucune partie de la vapeur n'est envoyée à l'échangeur E.

Au lieu de diviser la vapeur d'eau 5 en deux pour alimenter la turbine T1 et l'échangeur E, une autre possibilité serait de passer la vapeur d'eau 5 d'abord dans l'échangeur E et ensuite la détendre dans la première turbine T1.

La vapeur d'eau 9 pour chauffer l'échangeur E peut provenir d'un inter-étage de la première turbine T1.

Comme illustré dans la Figure 2, plusieurs débits de vapeur d'eau à des températures différentes peuvent servir à chauffer le liquide vaporisé 17 à différentes étapes.

Afin d'augmenter l'efficacité de l'échange thermique, la turbine T1 de la Figure 1 est constituée par une turbine haute pression T1', une turbine pression intermédiaire T1" et une turbine pression basse T1'". La vapeur d'eau 13 est détendue dans ces trois turbines en série et de la vapeur est prise à huit niveaux de pression différents. Chacun de ces débits de vapeur chauffe le liquide vaporisé 17 dans un échangeur E1, E2, E3, E4, E5, E6, E7, E8 pour produire le débit chauffé envoyé à la turbine T2. Les échangeurs E1, E2, E3, E4, E5, E6, E7, E8 remplissent le rôle de E dans la Figure 1. De même, la turbine T2 peut être constituée de plusieurs étages de détente avec un réchauffage avant chaque détente selon le principe décrit ci-dessus.
Les débits de vapeur sont réunis et envoyés au condenseur C où se condense la vapeur 19 issue de la dernière turbine T1'". Comme illustré à la Figure 1, la vapeur condensée dans le condenseur C peut être envoyée à la centrale 3.

Au lieu de diviser la vapeur d'eau 5 en deux pour alimenter la turbine T1 et l'échangeur E, une autre possibilité serait de passer la vapeur d'eau 5 d'abord dans l'échangeur E et ensuite la détendre dans la première turbine T1.

La vapeur d'eau 9 pour chauffer l'échangeur E peut provenir d'un inter-étage de la première turbine T1.

Comme illustré dans la Figure 2, plusieurs débits de vapeur d'eau à des températures différentes peuvent servir à chauffer le liquide vaporisé 17 à différentes étapes.

Afin d'augmenter l'efficacité de l'échange thermique, la turbine T1 de la Figure 1 est constituée par une turbine haute pression T1', une turbine pression intermédiaire T1" et une turbine pression basse T1'". La vapeur d'eau 13 est détendue dans ces trois turbines en série et de la vapeur est prise à huit niveaux de pression différents. Chacun de ces débits de vapeur chauffe le liquide vaporisé 17 dans un échangeur E1, E2, E3, E4, E5, E6, E7, E8 pour produire le débit chauffé envoyé à la turbine T2. Les échangeurs E1, E2, E3, E4, E5, E6, E7, E8 remplissent le rôle de E dans la Figure 1. De même, la turbine T2 peut être constituée de plusieurs étages de détente avec un réchauffage avant chaque détente selon le principe décrit ci-dessus.
Les débits de vapeur sont réunis et envoyés au condenseur C où se condense la vapeur 19 issue de la dernière turbine T1'". Comme illustré à la Figure 1, la vapeur condensée dans le condenseur C peut être envoyée à la centrale 3.

## Revendications

1. Procédé de génération d'électricité et de stockage d'énergie au moyen d'une unité comprenant une source de chaleur (3) et un appareil de vaporisation de liquide (V) dans lequel :
pendant une première période
a) on produit de l'énergie thermique au moyen de l'unité (3) et on utilise l'énergie thermique pour vaporiser de l'eau ou pour chauffer de la vapeur d'eau, on détend la vapeur d'eau formée dans une première turbine (T1) et on utilise la première turbine pour entraîner un générateur d'électricité (G1) afin de produire de l'électricité
b) on vaporise du gaz liquéfié (15) pour produire un gaz sous pression (17)
c) on réchauffe le gaz sous pression et
d) on détend le fluide sous pression dans une deuxième turbine (T2) pour produire de l'électricité et
i) pour réchauffer le fluide sous pression, on utilise une partie de l'énergie thermique produite dans l'étape a) pour réchauffer le fluide sous pression en utilisant une partie de la vapeur d'eau destinée à la première turbine de l'unité ou une partie de la chaleur de la vapeur d'eau destinée à la première turbine de l'unité pour réchauffer le fluide sous pression ou
ii) on chauffe un fluide par de la chaleur générée par la source de chaleur, on utilise une partie de la chaleur du fluide chauffé pour préchauffer le fluide destiné à la deuxième turbine (T2) et on utilise une autre partie de la chaleur du fluide chauffé pour chauffer de l'eau ou de la vapeur d'eau qui est envoyée se détendre dans la première turbine (T1) pour générer l'électricité, et
iii) une première partie du fluide chauffé par la source de chaleur chauffe l'eau ou la vapeur d'eau destinée à la première turbine (T1) et une deuxième partie du fluide chauffé par la source de chaleur chauffe le gaz sous pression destiné à la deuxième turbine (T2), le débit de la deuxième partie du fluide étant au plus 30% de la somme des première et deuxième parties
**caractérisé en ce que** l'unité comprenant une source de chaleur (3) est une centrale nucléaire et la source de chaleur est une réaction nucléaire , le gaz liquéfié(15) provient d'un stockage cryogénique (S)
et pendant une deuxième période,
a) on produit de l'énergie thermique au moyen de la centrale nucléaire (3) et on utilise l'énergie thermique pour générer de l'électricité
b) on utilise de l'énergie électrique et/ou mécanique générée par la centrale pour liquéfier le gaz (7),
c) on stocke le gaz liquéfié (15) dans le stockage (S).

2. Procédé selon la revendication 1 dans lequel pendant la première période, une première partie de la vapeur d'eau générée par la réaction nucléaire est détendue dans la première turbine (T1) et une deuxième partie de la vapeur d'eau générée par la réaction nucléaire sert à préchauffer le gaz sous pression destiné à la deuxième turbine (T2), le débit de la deuxième partie de la vapeur d'eau étant au plus 30% de la somme des première et deuxième parties.

3. Procédé selon l'une des revendications précédentes dans lequel pendant la première période, les première et deuxième turbines (T1,T2) ensemble produisent plus d'électricité qu'aurait produit la première turbine (T1) seule en utilisant toute la chaleur du fluide chauffé ou des fumées respectivement pour chauffer l'eau ou la vapeur d'eau destinée à la première turbine.

4. Procédé selon l'une des revendications précédentes dans lequel pendant la première période, le seul gaz détendu dans la deuxième turbine (T2) est le fluide sous pression (17).

5. Procédé selon l'une des revendications précédentes dans lequel la deuxième période correspond à une période de plus faible demande en électricité et/ou de tarif d'électricité plus faible que la première période.

6. Procédé selon l'une des revendications précédentes dans lequel pendant la deuxième période, la première turbine (T1) génère de l'électricité qui sert à liquéfier le gaz.

7. Procédé selon l'une des revendications précédentes dans lequel pendant la première période, on ne liquéfie pas le gaz.

8. Procédé selon l'une des revendications 5 à 7 dans lequel pendant la première période on ne vaporise pas le liquide stocké (15).

9. Procédé selon l'une des revendications 5 à 8 dans lequel pendant la première période, on ne détend pas le fluide sous pression dans la deuxième turbine (T2).

10. Appareil intégré de génération d'électricité comprenant une unité comprenant une source de chaleur et une première turbine (T1), qui est une turbine à vapeur d'eau, reliée à des moyens de génération d'électricité (G1), un appareil de vaporisation du gaz liquéfié (V) comprenant une deuxième turbine (T2), qui est une turbine de détente de gaz liquéfié vaporisé, reliée à des moyens de génération d'électricité (G2), des moyens pour envoyer de la vapeur d'eau provenant de la source de chaleur aux moyens de préchauffage (E) du gaz liquéfié vaporisé (17) en amont de la turbine (T2), **caractérisé en ce que** l'unité comprenant la source de chaleur est une centrale nucléaire, l'appareil intégré comprend des moyens pour générer et/ou chauffer la vapeur d'eau par la réaction nucléaire un stockage (S) pour stocker le gaz liquéfié (15) et un appareil de liquéfaction du gaz (L) adapté pour utiliser de l'énergie électrique et/ou mécanique générée par la centrale pour liquéfier le gaz (7).

11. Appareil intégré de génération d'électricité comprenant une unité comprenant une source de chaleur et une première turbine (T1), qui est une turbine à vapeur d'eau, reliée à des moyens de génération d'électricité (G1), un appareil de vaporisation du gaz liquéfié (V) comprenant une deuxième turbine (T2), qui est une turbine de détente de gaz liquéfié vaporisé, reliée à des moyens de génération d'électricité (G2), des moyens pour envoyer un fluide chauffé par la source de chaleur et provenant de la source de chaleur aux moyens de préchauffage du gaz liquéfié vaporisé en amont de la turbine de détente (T2) **caractérisé en ce que** l'unité comprenant la source de chaleur est une centrale nucléaire, l'appareil intégré comprend des moyens pour chauffer un fluide par la réaction nucléaire générant ainsi le fluide chauffé, un stockage (S) pour stocker le gaz liquéfié (15) et un appareil de liquéfaction du gaz (L) adapté pour utiliser de l'énergie électrique et/ou mécanique générée par la centrale pour liquéfier le gaz (7).

## Patentansprüche

1. Verfahren zum Erzeugen von Elektrizität und zur Speicherung von Energie mittels einer Einheit, umfassend
eine Wärmequelle (3) und ein Gerät zum Verdampfen von Flüssigkeit (V) wobei:
während einer ersten Periode
a) thermische Energie mittels der Einheit (3) produziert wird und die thermische Energie zum Verdampfen von Wasser oder zum Erwärmen von Wasserdampf verwendet wird, der gebildete Wasserdampf in einer ersten Turbine (T1) entspannt wird und die erste Turbine verwendet wird, um einen Elektrizitätsgenerator (G1) anzutreiben, damit Elektrizität produziert wird
b) verflüssigtes Gas (15) verdampft wird, um ein Gas unter Druck (17) zu produzieren
c) das Gas unter Druck wieder erwärmt wird und
d) das Fluid unter Druck in einer zweiten Turbine (T2) entspannt wird, um Elektrizität zu produzieren, und
i) um das Fluid unter Druck wieder zu erwärmen ein Teil der in Schritt a) produzierten thermischen Energie verwendet wird, um das Fluid unter Druck wieder zu erwärmen, indem ein Teil des Wasserdampfs, der für die erste Turbine der Einheit bestimmt ist, oder ein Teil der Wärme des Wasserdampfs, der für die erste Turbine der Einheit bestimmt ist, verwendet wird, um das Fluid unter Druck wieder zu erwärmen, oder
ii) ein Fluid durch die durch die Wärmequelle erzeugte Wärme erwärmt wird, ein Teil der Wärme der erwärmten Fluids zum Vorwärmen des für die zweite Turbine (T2) bestimmten Fluids verwendet wird, und ein anderer Teil der Wärme des erwärmten Fluids verwendet wird, um Wasser oder Wasserdampf, der zum Entspannen in die erste Turbine (T1) geschickt wird, um Elektrizität zu erzeugen, zu erwärmen, und
iii) ein erster Teil des durch die Wärmequelle erwärmten Fluids das Wasser oder den Wasserdampf, bestimmt für die erste Turbine (T1), erwärmt, und ein zweiter Teil des durch die Wärmequelle erwärmten Fluids das Gas unter Druck, bestimmt für die zweite Turbine (T2), erwärmt, wobei der Volumenstrom des zweiten Teils des Fluids höchstens 30 % der Summe des ersten und zweiten Teils beträgt,
**dadurch gekennzeichnet, dass** die eine Wärmequelle (3) umfassende Einheit ein Kernkraftwerk und die Wärmequelle eine Kernreaktion ist, das verflüssigte Gas (15) aus einem kryogenen Speicher (S) stammt
und während einer zweiten Periode
a) thermische Energie mittels des Kernkraftwerks (3) produziert wird und die thermische Energie zum Erzeugen von Elektrizität verwendet wird,
b) durch das Kraftwerk erzeugte elektrische und/oder mechanische Energie verwendet wird, um das Gas (7) zu verflüssigen,
c) das verflüssigte Gas (15) in dem Speicher (S) gespeichert wird.

2. Verfahren nach Anspruch 1, wobei während der ersten Periode ein erster Teil des durch die Kernreaktion erzeugten Wasserdampfs in der ersten Turbine (T1) entspannt wird und ein zweiter Teil des durch die Kernreaktion erzeugten Wasserdampfs zum Vorwärmen des für die zweite Turbine (T2) bestimmten Gases unter Druck dient, wobei der Volumenstrom des zweiten Teils des Wasserdampfs höchstens 30 % der Summe des ersten und zweiten Teils beträgt.

3. Verfahren nach einem der vorstehenden Ansprüche, wobei während der ersten Periode die erste und zweite Turbine (T1, T2) zusammen mehr Elektrizität produzieren als die erste Turbine (T1) alleine, unter Verwendung der gesamten jeweiligen Wärme des erwärmten Fluids oder der Dämpfe, zum Erwärmen des für die erste Turbine bestimmten Wassers oder Wasserdampfs, produziert hätte.

4. Verfahren nach einem der vorstehenden Ansprüche, wobei während der ersten Periode das einzige in der zweiten Turbine (T2) entspannte Gas das Fluid unter Druck (17) ist.

5. Verfahren nach einem der vorstehenden Ansprüche, wobei die zweite Periode einer Periode schwächerer Nachfrage nach Elektrizität und/oder eines schwächeren Elektrizitätstarifs als die erste Periode entspricht.

6. Verfahren nach einem der vorstehenden Ansprüche, wobei während der zweiten Periode die erste Turbine (T1) Elektrizität erzeugt, die dem Verflüssigen des Gases dient.

7. Verfahren nach einem der vorstehenden Ansprüche, wobei während der ersten Periode das Gas nicht verflüssigt wird.

8. Verfahren nach einem der Ansprüche 5 bis 7, wobei während der ersten Periode die gespeicherte Flüssigkeit (15) nicht verdampft wird.

9. Verfahren nach einem der Ansprüche 5 bis 8, wobei während der ersten Periode das Fluid unter Druck in der zweiten Turbine (T2) nicht entspannt wird.

10. Integriertes Gerät zum Erzeugen von Elektrizität, umfassend eine Einheit, umfassend eine Wärmequelle und eine erste Turbine (T1), die eine mit Mitteln zum Erzeugen von Elektrizität (G1) verbundene Wasserdampf-Turbine ist, ein Gerät zum Verdampfen des verflüssigten Gases (V), umfassend eine zweite Turbine (T2), die eine mit Mitteln zum Erzeugen von Elektrizität (G2) verbundene Entspannungsturbine von verdampftem verflüssigtem Gas ist, der Turbine (T2) vorgelagerte Mittel zum Schicken von aus der Wärmequelle stammenden Wasserdampf zu den Vorwärmemitteln (E) des verdampften verflüssigten Gases (17), **dadurch gekennzeichnet, dass** die Einheit, die die Wärmequelle umfasst, ein Kernkraftwerk ist, das integrierte Gerät Mittel zum Erzeugen und/oder Erwärmen des Wasserdampfs durch die Kernreaktion, einen Speicher (S) zum Speichern des verflüssigten Gases (15) und ein Gerät zum Verflüssigen von Gas (L), angepasst zum Verwenden von durch das Kraftwerk zum Verflüssigen von Gas (7) erzeugter elektrischer und/oder mechanischer Energie, umfasst.

11. Integriertes Gerät zum Erzeugen von Elektrizität, umfassend eine Einheit, umfassend eine Wärmequelle und eine erste Turbine (T1), die eine mit Mitteln zum Erzeugen von Elektrizität (G1) verbundene Wasserdampf-Turbine ist, ein Gerät zum Verdampfen von verflüssigtem Gas (V), umfassend eine zweite Turbine (T2), die eine mit Mitteln zum Erzeugen von Elektrizität (G2) verbundene Entspannungsturbine von verdampftem verflüssigtem Gas ist, der Entspannungsturbine (T2) vorgelagerte Mittel zum Schicken eines durch die Wärmequelle und aus der Wärmequelle stammenden erwärmten Fluids zu den Vorwärmemitteln des verdampften verflüssigten Gases, **dadurch gekennzeichnet, dass** die Einheit, die die Wärmequelle umfasst ein Kernkraftwerk ist, das integrierte Gerät Mittel zum Erwärmen eines Fluids durch die Kernreaktion, damit das erwärmte Fluid erzeugend, einen Speicher (S) zum Speichern des verflüssigten Gases (15) und ein Gerät zum Verflüssigen des Gases (L), angepasst zum Verwenden von durch das Kraftwerk zum Verflüssigen von Gas (7) erzeugter elektrischer und/oder mechanischer Energie, umfasst.

## Claims

1. Method for generating electricity and storing energy via a unit comprising a source of heat (3) and an apparatus for vaporising liquid (V), wherein:
during a first period
a) thermal energy is produced via the unit (3) and the thermal energy is used to vaporise water or to heat water vapour, the water vapour formed is expanded in a first turbine (T1) and the first turbine is used to drive an electricity generator (G1) in order to produce electricity
b) liquefied gas (15) is vaporised in order to produce a pressurised gas (17)
c) the pressurised gas is heated and
d) the pressurised fluid is expanded in a second turbine (T2) in order to produce electricity and
i) in order to heat the pressurised fluid, a portion of the thermal energy produced in step a) is used to heat the pressurised fluid by using a portion of the water vapour intended for the first turbine of the unit or a portion of the heat of the water vapour intended for the first turbine of the unit in order to heat the pressurised fluid or
ii) a fluid is heated by the heat generated by the source of heat, a portion of the heat of the heated fluid is used to preheat the fluid intended for the second turbine (T2) and another portion of the heat of the heated fluid is used to heat water or water vapour that is sent to be expanded in the first turbine (T1) in order to generate electricity, and
iii) a first portion of the fluid heated by the source of heat heats the water or the water vapour intended for the first turbine (T1) and a second portion of the fluid heated by the source of heat heats the pressurised gas intended for the second turbine (T2), the flow rate of the second portion of the fluid being at most 30% of the sum of the first and second portions
**characterised in that** the unit comprising a source of heat (3) is a nuclear power plant and the source of heat is a nuclear reaction, the liquefied gas (15) comes from a cryogenic storage (S)
and during a second period,
a) thermal energy is produced via the nuclear power plant (3) and the thermal energy is used to generate electricity
b) the electric and/or mechanical energy generated by the power plant is used to liquefy the gas (7),
c) the liquefied gas (15) is stored in the storage (S).

2. Method according to claim 1, wherein during the first period, a first portion of the water vapour generated by the nuclear reaction is expanded in the first turbine (T1) and a second portion of the water vapour generated by the nuclear reaction is used to preheat the pressurised gas intended for the second turbine (T2), the flow rate of the second portion of the water vapour being at most 30% of the sum of the first and second portions.

3. Method according to one of the previous claims, wherein during the first period, the first and second turbines (T1, T2) together produce more electricity than the first turbine (T1) would have produced alone by using all of the heat of the heated fluid or of the flue gas, respectively, to heat the water or the water vapour intended for the first turbine.

4. Method according to one of the previous claims, wherein during the first period, the only gas expanded in the second turbine (T2) is the pressurised fluid (17).

5. Method according to one of the previous claims, wherein the second period corresponds to a period of lower demand for electricity and/or lower electricity price than the first period.

6. Method according to one of the previous claims, wherein during the second period, the first turbine (T1) generates electricity that is used to liquefy the gas.

7. Method according to one of the previous claims, wherein during the first period, the gas is not liquefied.

8. Method according to one of claims 5 to 7, wherein during the first period, the stored liquid (15) is not vaporised.

9. Method according to one of claims 5 to 8, wherein during the first period, the pressurised fluid is not expanded in the second turbine (T2).

10. Integrated apparatus for generating electricity, comprising a unit comprising a source of heat and a first turbine (T1), which is a steam turbine, connected to means for generating electricity (G1), an apparatus for vaporising the liquefied gas (V) comprising a second turbine (T2), which is a turbine for expanding vaporised liquefied gas, connected to means for generating electricity (G2), means for sending water vapour coming from the source of heat to the means for preheating (E) the vaporised liquefied gas (17) upstream of the turbine (T2), **characterised in that** the unit comprising the source of heat is a nuclear power plant, the integrated apparatus comprises means for generating and/or heating the water vapour via the nuclear reaction a storage (S) for storing the liquefied gas (15) and an apparatus for liquefying the gas (L) suitable for using electric and/or mechanical energy generated by the power plant to liquefy the gas (7).

11. Integrated apparatus for generating electricity, comprising a unit comprising a source of heat and a first turbine (T1), which is a steam turbine, connected to means for generating electricity (G1), an apparatus for vaporising the liquefied gas (V) comprising a second turbine (T2), which is a turbine for expanding vaporised liquefied gas, connected to means for generating electricity (G2), means for sending a fluid heated by the source of heat and coming from the source of heat to the means for preheating the vaporised liquefied gas upstream of the expansion turbine (T2) **characterised in that** the unit comprising the source of heat is a nuclear power plant, the integrated apparatus comprises means for heating a fluid via the nuclear reaction thus generating the heated fluid, a storage (S) for storing the liquefied gas (15) and an apparatus for liquefying the gas (L) suitable for using electric and/or mechanical energy generated by the power plant to liquefy the gas (7).
